# EUROPÄISCHE PATENTANMELDUNG

(11) **EP 3 868 330 A1**
(43) Veröffentlichungstag der Anmeldung: **25.08.2021**
(21) Anmeldenummer: 20158257.4
(22) Anmeldetag: 19.02.2020
(51) Int. Cl.: A61C 13/00

(54) **VERFAHREN ZUR HERSTELLUNG EINER DENTALEN RESTAURATION**

(71) Anmelder: Ivoclar Vivadent AG, 9494 Schaan (LI)
(72) Erfinder: FAUST, Alexander, 9442 Berneck (CH)
(74) Vertreter: Baldus, Oliver

(57) **Zusammenfassung**

Die vorliegende Erfindung betrifft ein Verfahren zur Herstellung einer dentalen Restauration, mit den Schritten eines Erzeugens (S101) eines dreidimensionalen Datensatzes zur Beschreibung der räumlichen Form der dentalen Restauration in einem Rohling; eines Hinzufügens (S102) der räumlichen Form der dentalen Restauration zu einem Datensatz des Rohlings; und eines Integrierens (S103) von räumlichen Daten für Haltestege zum Fixieren der dentalen Restauration in den dreidimensionalen Datensatz des Rohlings durch einen Machine-Learning-Algorithmus (103).

## Beschreibung

Die vorliegende Erfindung betrifft ein Verfahren zur Herstellung einer dentalen Restauration, ein Computerprogramm zur Herstellung einer dentalen Restauration und eine Fräsvorrichtung zum Herstellen einer dentalen Restauration.

Für die Herstellung von unterschiedlichen dentalen Restaurationen werden die designten Restaurationen mittels einer CAM-Software in Materialrohlingen platziert, die unterschiedliche Formen aufweisen können.

Die Erstellung von Haltestegen zur Fixierung der dentalen Restauration innerhalb des Materialrohlings erfolgt auf Basis von voreingestellten Standardparametern. Hierbei wird beispielsweise der Abstand zur Präparationsgrenze definiert. Durch das Volumen der dentalen Restauration wird die Anzahl der Haltestege vorgegeben. Hierdurch kann jedoch keine zahntechnisch zufriedenstellende Positionierung der Haltstege ermittelt werden. Daher ist oft eine händische Anpassung der automatisch vorgeschlagenen Haltestege erforderlich.

Es ist daher die technische Aufgabe der vorliegenden Erfindung, eine Herstellung einer dentalen Restauration auch nach zahntechnischen Vorgaben mit Haltestegen zu erleichtern.

Diese Aufgabe wird durch Gegenstände nach den unabhängigen Ansprüchen gelöst. Vorteilhafte Ausführungsformen sind Gegenstand der abhängigen Ansprüche, der Beschreibung und der Figuren.

Gemäß einem ersten Aspekt wird diese technische Aufgabe durch ein Verfahren zur Herstellung einer dentalen Restauration gelöst, mit den Schritten eines Erzeugens eines dreidimensionalen Datensatzes zur Beschreibung der räumlichen Form der dentalen Restauration in einem Rohling; eines Hinzufügens der räumlichen Form der dentalen Restauration zu einem Datensatz des Rohlings; und eines Integrierens von räumlichen Daten für Haltestege zum Fixieren der dentalen Restauration in den dreidimensionalen Datensatz des Rohlings durch einen Machine-Learning-Algorithmus. Durch das Verfahren auf Basis des Machine-Learning-Algorithmus werden die technischen Vorteile eines hohen Maßes an individueller Automatisierung, einer Zeitersparnis und einer erhöhten Prozesssicherheit erreicht. Es erfolgt eine stetige Anpassung der vorgeschlagenen Haltestege anhand der Bedürfnisse des Anwenders und verschiedener dentaler Fälle und Indikationen (Krone, Brücke, Splint, Denture) oder Materialien.

In einer technisch vorteilhaften Ausführungsform des Verfahrens umfasst der Machine-Learning-Algorithmus ein angelerntes neuronales Netz. Dadurch wird beispielsweise der technische Vorteil erreicht, dass Haltestege schnell und effizient ermittelt werden können.

In einer weiteren technisch vorteilhaften Ausführungsform des Verfahrens ist der Machine-Learning-Algorithmus durch Trainingsdaten eines einzelnen Benutzers oder einer Benutzergruppe angelernt worden. Dadurch wird beispielsweise der technische Vorteil erreicht, dass der Machine-Learning-Algorithmus durch das Wissen ein oder mehrerer Anwender bzw. Experten verbessert wird.

In einer weiteren technisch vorteilhaften Ausführungsform des Verfahrens wird der Machine-Learning-Algorithmus während dem Betrieb durch weitere Trainingsdaten oder individuelle reale Fallbeispiele trainiert. Dadurch wird beispielsweise der technische Vorteil erreicht, dass eine kontinuierliche Trainingsoption erreicht wird und sich die Ergebnisse des Machine-Learning-Algorithmus stetig verbessern. Insbesondere kann es sein, dass der Vorschlag des Machine-Learning-Algorithmus durch einen Benutzer nochmals angepasst wird. In diesem Fall findet sich die Lernkurve in einem angepassten Machine-Learning-Algorithmus wieder.

In einer weiteren technisch vorteilhaften Ausführungsform des Verfahrens sind die weiteren Trainingsdaten oder individuellen realen Fallbeispiele jeweils in Form von dreidimensionalen Datensätzen in einer Datenbank gespeichert. Die Datenbank kann eine lokale, eine netzbasierte oder eine cloudbasierte Datenbank sein. Dadurch wird beispielsweise der technische Vorteil erreicht, dass die Anordnung und Form der Haltestege kontinuierlich verbessert wird.

In einer weiteren technisch vorteilhaften Ausführungsform des Verfahrens legt der Machine-Learning-Algorithmus die räumliche Position der Haltestege an der dentalen Restauration in dem Rohling fest. Dadurch wird beispielsweise der technische Vorteil erreicht, dass die räumliche Position der Haltestege schnell und effizient ermittelt wird.

In einer weiteren technisch vorteilhaften Ausführungsform des Verfahrens legt der Machine-Learning-Algorithmus den Winkel der Haltestege an der dentalen Restauration und dem Rohling fest. Dadurch wird beispielsweise der technische Vorteil erreicht, dass der Winkel der Haltestege schnell und effizient ermittelt wird.

In einer weiteren technisch vorteilhaften Ausführungsform des Verfahrens legt der Machine-Learning-Algorithmus die Anzahl, Form und/oder Größe der Haltestege an der dentalen Restauration und dem Rohling festlegt. Dadurch wird beispielsweise der technische Vorteil erreicht, dass die Anzahl, Form und/oder Größe der Haltestege schnell und effizient ermittelt wird.

In einer weiteren technisch vorteilhaften Ausführungsform des Verfahrens integriert der Machine-Learning-Algorithmus räumliche Daten für einen Sinterklotz in den dreidimensionalen Datensatz. Der Machine-Learning-Algorithmus kann hierbei automatisch festlegen, ob der Sinterklotz für den zu bearbeitenden Datensatz erforderlich ist oder welche Geometrie der Sinterklotz haben soll. Der Datensatz umfasst in diesem Fall Daten für den Rohling, die Restauration, Haltestege und den Sinterklotz. Der Sinterklotz dient zum späteren Sintern der dentalen Restauration in einem Sinterofen als Stütze für die übrige Restauration, beispielsweise bei Restaurationen aus Zirkon oder Kobaltchrom. Der Sinterklotz kann halbmondförmig, rechteckig oder durch Querverstrebungen gebildet sein. Dadurch wird beispielsweise der technische Vorteil erreicht, dass zusätzlich zu den Haltstegen ein Sinterklotz der dentalen Restauration erzeugt wird. Bei der Erzeugung der Daten für den Sinterklotz kann die Position, der Winkel, die Anzahl, die Form und/oder die Größe der Haltestege berücksichtigt werden.

In einer weiteren technisch vorteilhaften Ausführungsform des Verfahrens intergiert der Machine-Learning-Algorithmus Daten für Sollschnittstellen oder Sollbruchstellen der Haltestege in den dreidimensionalen Datensatz. Der Machine-Learning-Algorithmus kann hierbei automatisch festlegen, wo und wann Sollbruchstellen gesetzt werden. Beispielweise kann der Machine-Learning-Algorithmus keine Sollbruchstellen an denjenigen Haltestegen vorsehen, die an dem Sinterklotz verbunden sind. Dadurch wird beispielsweise der technische Vorteil erreicht, dass sich die Haltestege auf einfache Weise abtrennen lassen.

In einer weiteren technisch vorteilhaften Ausführungsform des Verfahrens wird ein Rohling durch eine Fräsvorrichtung entsprechend dem dreidimensionalen Datensatz bearbeitet. Dadurch wird beispielsweise der technische Vorteil erreicht, dass der Rohling automatisch gefertigt werden kann.

Gemäß einem zweiten Aspekt wird diese technische Aufgabe durch ein Computerprogramm gelöst, umfassend Befehle, die bei der Ausführung des Computerprogramms durch einen Computer diesen veranlassen, das Verfahren nach dem ersten Aspekt auszuführen. Dadurch werden die gleichen technischen Vorteile wie durch das Verfahren nach dem ersten Aspekt erreicht.

Gemäß einem dritten Aspekt wird diese technische Aufgabe durch eine Fräsmaschine und/oder Schleifmaschine mit einem Computerprogramm nach dem zweiten Aspekt gelöst. Dadurch werden die gleichen technischen Vorteile wie durch das Verfahren nach dem ersten Aspekt erreicht.

Ausführungsbeispiele der Erfindung sind in den Zeichnungen dargestellt und werden im Folgenden näher beschrieben.

Es zeigen:
- Fig. 1: eine grafische Ansicht eines dreidimensionalen Datensatzes zur Beschreibung der räumlichen Form der dentalen Restauration;
- Fig. 2: eine weitere grafische Ansicht eines dreidimensionalen Datensatzes zur Beschreibung der räumlichen Form der dentalen Restauration;
- Fig. 3: eine weitere grafische Ansicht eines dreidimensionalen Datensatzes zur Beschreibung der räumlichen Form der dentalen Restauration;
- Fig. 4: eine weitere grafische Ansicht eines dreidimensionalen Datensatzes zur Beschreibung der räumlichen Form der dentalen Restauration mit einem Sinterklotz;
- Fig. 5: ein Blockdiagramm eines Verfahrens zur Herstellung einer dentalen Restauration;
- Fig. 6: eine Ansicht einer Fräsmaschine zum Durchführen des Verfahrens mit einem Rohling; und
- Fig. 7: eine Ansicht eines Rohlings.

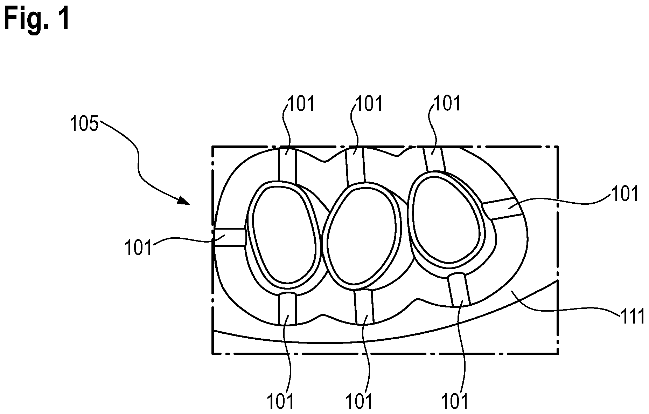

Fig. 1 zeigt eine grafische Ansicht eines dreidimensionalen Datensatzes 105 zur Beschreibung der räumlichen Form der dentalen Restauration 100. Aus einem Datensatz, der die Patientensituation wiedergibt und der durch ein Scan-Modell, einen Intraoralscan oder Desktopscan erhalten wird, wird dabei ein Datensatz der Restauration abgeleitet. Die dentale Restauration 100 ist ein geformtes Ersatzteil, durch das Zahndefekte oder zerstörte Zahnsubstanz ersetzt werden. Die Form der dentalen Restauration 100 in einem Rohling 111 wird durch den dreidimensionalen Datensatz 105 beschrieben. Der Datensatz 105 umfasst Daten, die die Form der dentalen Restauration 100 beschreiben.

Die dentale Restauration 100 kann auf Basis des dreidimensionalen Datensatzes 105 aus dem scheibenförmigen Rohling 111 herausgefräst werden. Dabei wird die dentale Restauration 100 derart aus dem Rohling 111 herausgefräst, dass diese durch Haltestege 101 weiter im Rohling 111 gehalten wird. Die dentale Restauration 100 ist nach dem Fräsvorgang weiter über die Haltestege 101 mit dem verbleibenden Rohling 111 verbunden.

Die gezeigte dentale Restauration 100 wird durch acht verteilte und unterschiedlich angeordnete Haltestege 101 gehalten. Die Haltestege 101 können jeweils an unterschiedlichen Positionen, unter unterschiedlichem Winkeln und mit unterschiedlicher Form an der dentalen Restauration 100 vorgesehen sein. Auch die Anzahl der Haltstege 101 kann unterschiedlich gewählt werden.

Zum automatischen Integrieren von räumlichen Daten für die Haltestege 101 in den dreidimensionalen Datensatz des Rohlings wird ein Machine-Learning-Algorithmus verwendet. Der Machine-Learning-Algorithmus ist ein Algorithmus, der aus vorangehenden Beispielen in Form von dreidimensionalen Datensätzen lernt und diese nach Beendigung der Lernphase so verallgemeinern kann, dass Haltstege automatisch berechnet werden. Dazu kann dieser beim maschinellen Lernen ein statistisches Modell aufbauen, das auf Trainingsdaten beruht. Dabei werden Muster und Gesetzmäßigkeiten in den Trainingsdaten für die Positionierung von Haltestegen 101 erkannt. Der Machine-Learning-Algorithmus kann beispielsweise ein angelerntes neuronales Netz umfassen.

Nach Beendigung der ursprünglichen Lernphase kann die Lernphase anhand angepasster Fallbeispiele weitergeführt werden, die eine Anpassung der Positionierung der Haltestege hinsichtlich Form, Winkel, Größe, Anzahl ermöglichen. Dadurch wird eine Verbesserung des Machine-Learning-Algorithmus erreicht. Das Weiterführen der Lernphase wird vorzugweise automatisch oder nach einer vorgegebenen Anzahl von Fällen mit einer Deep-Learning-Datenbank durchgeführt. Dies kann alle Parameter, wie beispielsweise Sollbruchstellen und Sinterklotz, betreffen.

Die Deep-Learning-Datenbank kann eine Vielzahl von dreidimensionalen Datensätzen 105 einzelner Fallbeispiele speichern, bei denen die Haltestege optimiert worden sind. Die Datenbank kann lokal, netzwerkbasiert oder cloudbasiert gespeichert sein. In die cloudbasierte Datenbank können Fallbeispiele unterschiedlicher Nutzer eingespeichert werden, so dass eine umfangreiche Sammlung von Fallbeispielen in Form von dreidimensionalen Datensätzen 105 entsteht. Durch das Abrufen dreidimensionalen Datensätzen 105 mit den integrierten räumlichen Daten für Haltestege 101 kann der Machine-Learning-Algorithmus weiter angelernt werden.

Durch den angelernten Machine-Learning-Algorithmus können daten für Haltestege 101 automatisch in den dreidimensionalen Datensatz des Rohlings 111 integriert werden. Dieser dreidimensionale Datensatz 105 kann dann zum Bearbeiten der dentalen Restauration 100 verwendet werden. Der Machine-Learning-Algorithmus kann beispielsweise aus vorherigen Trainingsdaten angelernt werden, so dass dieser die Position, die Anzahl, die Form, die Größe und/oder den Winkel der Haltestege 101 an der dentalen Restauration 100 und dem Rohling festlegt 111.

Die Trainingsdaten zum Anlernen des Machine-Learning-Algorithmus können von einem einzelnen Benutzer oder einer Benutzergruppe stammen. Werden die Trainingsdaten von nur einem einzelnen Benutzer verwendet, lernt der Machine-Learning-Algorithmus optimal die Planung von Haltestegen 101 für diesen Benutzer. Dadurch kann der Machine-Learning-Algorithmus automatisch die Haltestege so planen, wie dies durch den einzelnen Benutzer geschehen würde. Daneben können jedoch auch Trainingsdaten einer gesamten Benutzergruppe mit mehrerer Benutzern verwendet werden, so dass sich die Datenbasis entsprechend verbreitert. Der Machine-Learning-Algorithmus kann während der Durchführung des Verfahrens kontinuierlich durch weitere Trainingsdaten trainiert werden, die aus einer nachträglichen manuellen Anpassung der Haltestege 101 durch einen Benutzer resultieren. Die Trainingsdaten der einzelnen Benutzer oder der Benutzergruppe können in einer Datenbank, wie beispielsweise einer Deep-Learning-Datenbank, gespeichert werden.

Das Design der dentalen Restauration 100, das mittels einer CAD-Software dreidimensional designt wird, wird nach Gestaltung als dreidimensionaler Datensatz, wie beispielsweise eine STL-Datei (Standard Triangulation/Tesselation Language), an eine CAM-Software weitergeleitet. In der CAM-Software wird ein dreidimensionaler Datensatz des Rohlings 111 angezeigt, in den der dreidimensionale Datensatz der gestalteten Restauration 100 eingefügt wird. Nach dem Einfügen werden mittels des Machine-Learning-Algorithmus an den dreidimensionalen Datensatz der gestalteten Restauration 100 die Haltestege 101 angereichert, durch die spätere Fixierung der dentalen Restauration 100 in dem Rohling 111 realisiert wird.

Die CAD- und CAM-Software kann gemeinsam über eine Benutzerschnittstelle (User Interface) abrufbar sein, um die Design- und Herstellungsprozesse in einer einzigen Softwareanwendung durchzuführen.

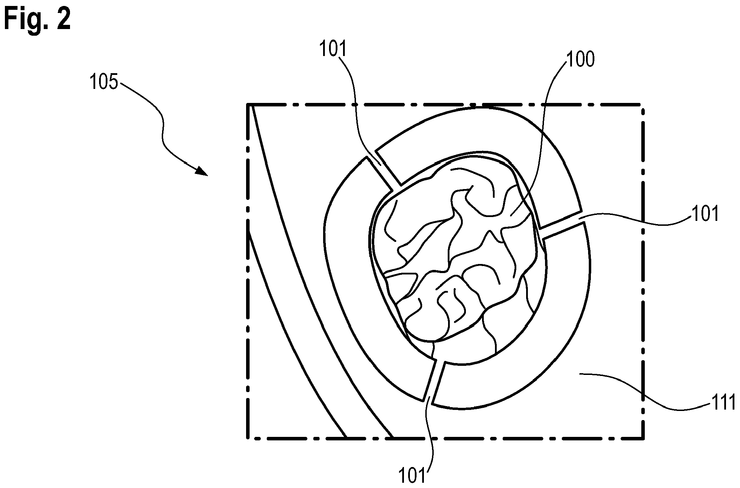

Fig. 2 zeigt eine weitere grafische Ansicht eines dreidimensionalen Datensatzes 105 zur Beschreibung der räumlichen Form der dentalen Restauration 100. In diesem Fall werden drei Haltestege 101 verwendet, um die spätere dentale Restauration 100 in dem Rohling 111 zu halten. Der dreidimensionale Datensatz 105 umfasst die räumlichen Daten der Restauration100, die räumlichen Daten der Haltestege 101 und die räumlichen Daten des Rohlings 111. Das Integrieren der räumlichen Daten für die Haltestege 101 erfolgt stets durch den angelernten Machine-Learning-Algorithmus.

Der Machine-Learning-Algorithmus erzeugt automatisch Daten für die Position, die Anzahl, die Form, die Größe und/oder den Winkel der Haltestege 101. Die Form der Haltestege 101 kann beispielsweise konisch, oval oder oval-konisch sein.

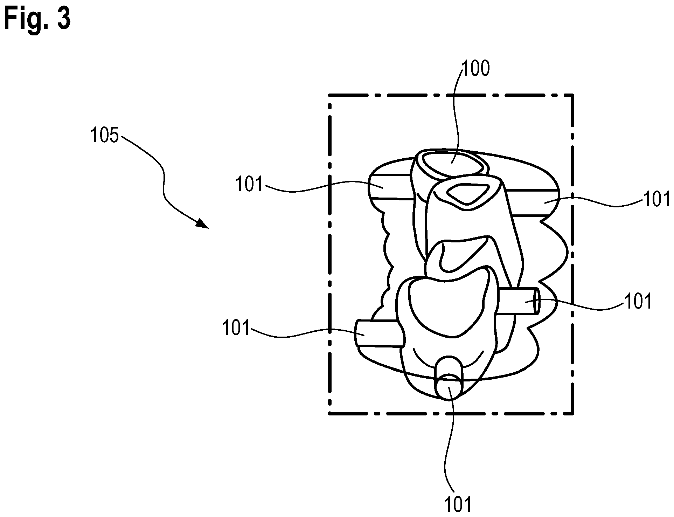

Fig. 3 zeigt eine weitere grafische Ansicht eines dreidimensionalen Datensatzes 105 zur Beschreibung der räumlichen Form der dentalen Restauration 100. In diesem Fall werden fünf Haltestege 101 verwendet, um die spätere dentale Restauration 100 in dem Rohling 111 zu halten. Der dreidimensionale Datensatz 105 umfasst auch hier die räumlichen Daten der Restauration 100, die räumlichen Daten der Haltestege 101 und die räumlichen Daten des Rohlings 111. Das Integrieren der räumlichen Daten für die Haltestege 101 erfolgt stets durch den angelernten Machine-Learning-Algorithmus.

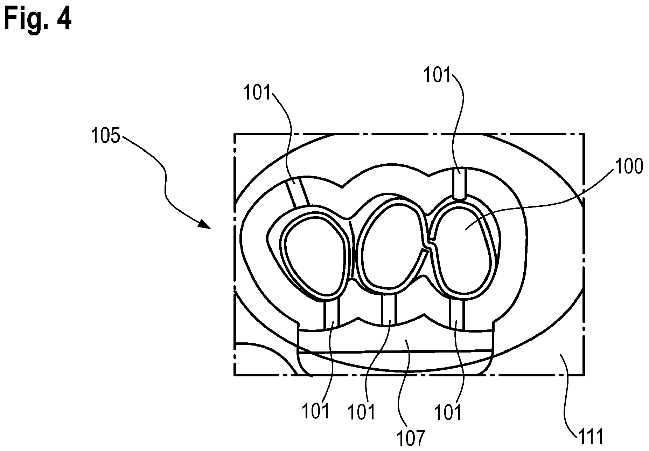

Fig. 4 zeigt eine weitere grafische Ansicht eines dreidimensionalen Datensatzes 105 zur Beschreibung der räumlichen Form der dentalen Restauration 100 mit einem Sinterklotz 107. Der Sinterklotz 107 dient zum späteren Sintern der dentalen Restauration 100 in einem Sinterofen. Die räumlichen Daten für den Sinterklotz 107 oder die Sinterstruktur werden ebenfalls durch den angelernten Machine-Learning-Algorithmus in den dreidimensionalen Datensatz integriert, so dass dieser automatisch auf Basis von Erfahrungswerten erzeugt wird.

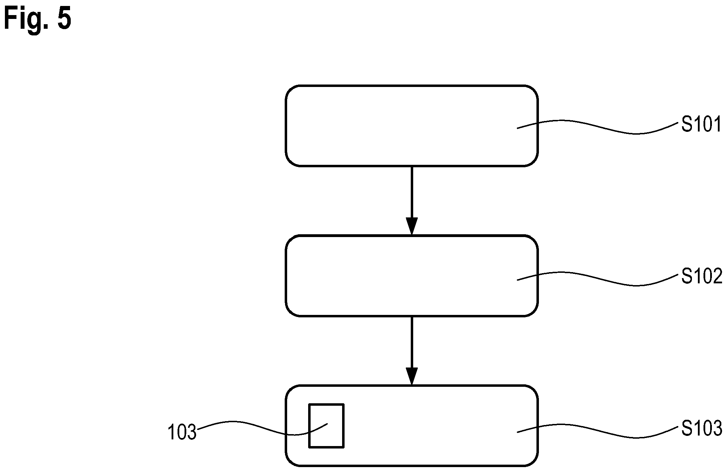

Fig. 5 zeigt ein Blockdiagramm eines Verfahrens zur Herstellung einer dentalen Restauration 100. Im Schritt S101 wird ein dreidimensionaler Datensatz 105 zur Beschreibung der räumlichen Form der dentalen Restauration 100 in dem Rohling 111 erzeugt. Danach wird in Schritt S102 die räumliche Form der dentalen Restauration 100 zu einem Datensatz des Rohlings 111 hinzugefügt. In Schritt S103 werden räumliche Daten für die Haltestege 101 zum Fixieren der dentalen Restauration 100 in den dreidimensionalen Datensatz des Rohlings 111 integriert. Das Integrieren der Daten wird durch den Machine-Learning-Algorithmus 103 vorgenommen.

Zusätzlich kann der Machine-Learning-Algorithmus 103 Daten für Sollschnittstellen oder Sollbruchstellen der Haltestege 101 in den dreidimensionalen Datensatz 105 integrieren. Diesen Sollschnittstellen oder Sollbruchstelle kann eine Materialschwächung, wie beispielsweise eine Kerbe, in die Haltestege 101 gefräst werden, so dass sich diese später in einfacher Weise abtrennen lassen.

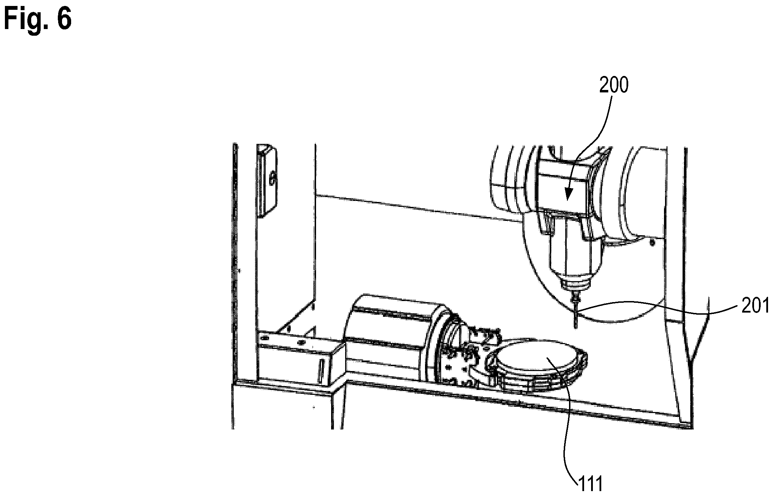

Fig. 6 zeigt eine Ansicht einer Fräsmaschine 200 zum Durchführen des Verfahrens mit dem Rohling 111. Die Fräsmaschine umfasst einen Fräskopf 201, mit dem Material von dem Rohling 111 entsprechend dem dreidimensionalen Datensatz 105 abgetragen werden kann, um die gewünschte Form zu erhalten. Aus den dreidimensionalen Daten werden hierzu in der CAM-Software CNC-Fräsbahnen generiert.

Der räumliche Datensatz 105 mit den Daten für die Haltestege 101 wird verwendet, um die dentale Restauration 100 aus dem Rohling 111 heraus zu fräsen. Die dentale Restauration 100 wird danach durch die Haltestege 101 in dem verbleibenden Rohling 111 gehalten.

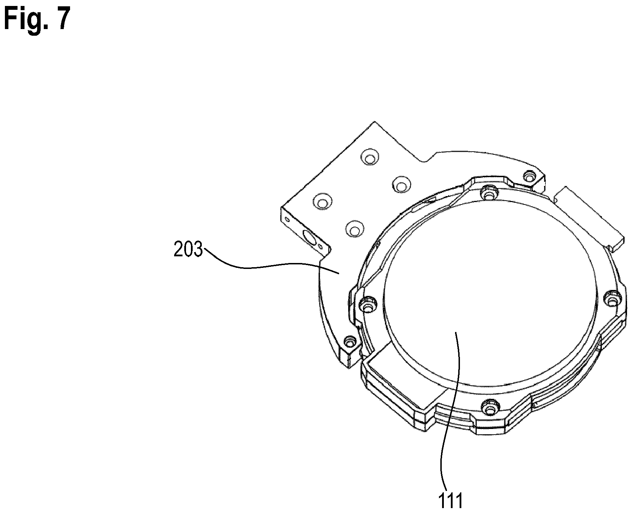

Fig. 7 zeigt eine Ansicht eines Rohlings 111. Der Rohling 111 ist in diesem Fall durch eine Keramikscheibe gebildet, aus der die dentale Restauration 100 herausgefräst wird. Dieser Rohling 111 wird durch einen dreidimensionalen Datensatz beschrieben. Der Rohling 111 wird mittels einer Halterung 203 in der Fräsvorrichtung 200 gehalten. Der Fräskopf 201 entfernt das Material des Rohlings 111, um die dentale Restauration 100 zu erhalten, die durch die Haltestege 101 innerhalb des Rohlings 111 gehalten wird.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Alle Verfahrensschritte können durch Vorrichtungen implementiert werden, die zum Ausführen des jeweiligen Verfahrensschrittes geeignet sind. Alle Funktionen, die von gegenständlichen Merkmalen ausgeführt werden, können ein Verfahrensschritt eines Verfahrens sein.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHENLISTE

- 100: Dentale Restauration
- 101: Haltesteg
- 103: Machine Learning Algorithmus
- 105: räumlicher Datensatz
- 107: Sinterklotz
- 111: Rohling

- 200: Fräsvorrichtung
- 201: Werkzeug
- 203: Haltevorrichtung

## Patentansprüche

1. Verfahren zur Herstellung einer dentalen Restauration (100), mit den Schritten:
Erzeugen (S101) eines dreidimensionalen Datensatzes (105) zur Beschreibung der räumlichen Form der dentalen Restauration (100) in einem Rohling (111);
Hinzufügen (S102) der räumlichen Form der dentalen Restauration (100) zu einem Datensatz des Rohlings (111); und
Integrieren (S103) von räumlichen Daten für Haltestege (101) zum Fixieren der dentalen Restauration (100) in den dreidimensionalen Datensatz (105) des Rohlings (111) durch einen Machine-Learning-Algorithmus (103).

2. Verfahren nach Anspruch 1, wobei der Machine-Learning-Algorithmus (103) ein angelerntes neuronales Netz umfasst.

3. Verfahren nach Anspruch 1 oder 2, wobei der Machine-Learning-Algorithmus (103) durch Trainingsdaten eines einzelnen Benutzers oder einer Benutzergruppe angelernt worden ist.

4. Verfahren nach Anspruch 3, wobei der Machine-Learning-Algorithmus (103) während dem Betrieb durch weitere Trainingsdaten oder individuelle reale Fallbeispiele trainiert wird.

5. Verfahren nach Anspruch 4, wobei die weiteren Trainingsdaten oder individuellen realen Fallbeispiele jeweils in Form von dreidimensionalen Datensätzen in einer Datenbank gespeichert sind.

6. Verfahren nach einem der vorangehenden Ansprüche, wobei der Machine-Learning-Algorithmus (103) die räumliche Position der Haltestege (101) an der dentalen Restauration (100) in dem Rohling (111) festlegt.

7. Verfahren nach einem der vorangehenden Ansprüche, wobei der Machine-Learning-Algorithmus (103) den Winkel der Haltestege (101) an der dentalen Restauration (100) und dem Rohling (111) festlegt.

8. Verfahren nach einem der vorangehenden Ansprüche, wobei der Machine-Learning-Algorithmus (103) die Anzahl, Form und/oder Größe der Haltestege (101) an der dentalen Restauration (100) und dem Rohling (111) festlegt.

9. Verfahren nach einem der vorangehenden Ansprüche, wobei der Machine-Learning-Algorithmus (103) räumliche Daten für einen Sinterklotz (107) in den dreidimensionalen Datensatzes (105) integriert.

10. Verfahren nach einem der vorangehenden Ansprüche, wobei der Machine-Learning-Algorithmus (103) Daten für Sollschnittstellen oder Sollbruchstellen der Haltestege (101) in den dreidimensionalen Datensatz (105) integriert.

11. Verfahren nach einem der vorangehenden Ansprüche, wobei ein Rohling (111) durch eine Fräsvorrichtung (200) entsprechend dem dreidimensionalen Datensatz (105) bearbeitet wird.

12. Computerprogramm, umfassend Befehle, die bei der Ausführung des Computerprogramms durch einen Computer diesen veranlassen, das Verfahren nach einem der Ansprüche 1 bis 11 auszuführen.

13. Fräsmaschine und/oder Schleifmaschine (200) mit einem Computerprogramm nach Anspruch 12.
